# EUROPEAN PATENT SPECIFICATION

(11) **EP 0 264 265 B1**
(45) Date of publication and mention of the grant of the patent: **04.08.1993**
(21) Application number: 87309063.3
(22) Date of filing: 14.10.1987
(51) Int. Cl.: G06K 15/10, B41J 2/22

(54) **Print head movement velocity control system for printer**
Drucksystem zur Steuerung der Bewegungsgeschwindigkeit des Druckkopfes
Système d'imprimante pour commander la vitesse du mouvement de la tête d'impression

(30) Priority: 14.10.1986 US 918413
(43) Date of publication of application: 20.04.1988
(73) Proprietor: International Business Machines Corporation, Armonk, N.Y. 10504 (US)
(72) Inventor: Malcolm, Jerry Walter, Austin Texas 78758 (US)
(74) Representative: Atchley, Martin John Waldegrave

(56) References cited:
- US-A- 4 037 216
- US-A- 4 169 991
- US-A- 4 261 039
- US-A- 4 469 460
- PATENT ABSTRACTS OF JAPAN, vol. 10, no. 55 (M-458)[2112], 5th March 1986; & JP-A-60 204 376 (HITACHI SEISAKUSHO K.K.) 15-10-1985

## Description

This invention relates generally to a printer of the type having a print head which moves relative to a print medium and in particular to the selection of the velocity of movement of the print head.

In the prior art are so-called daisy wheel printers of the type including a carriage movable relative to a print medium and supporting a print hammer arrangement and a rotating "daisy wheel" carrying printing elements adapted to be operated by the print hammer arrangement. In such printers variables such as printing element selection timing, required impact force for a selected printing element, print hammer firing timing, and carriage velocity are taken into account to obtain a desired print quality and to maximise throughput of print data. Impact force, firing timing, and carriage velocity are continually varied during the printing of a line. However, these printers are generally expensive and are primarily tailored for printing high quality text.

With the generally low cost so-called "dot matrix" printers in which the print head comprises a plurality of print wires which can print a matrix of dots to form each character, the velocity of the print head relative to the print medium can normally be selected by an application programmer (user) from a finite number of velocities capable of being handled by the printer. The user normally builds a selected velocity into an application program for a particular print job. For another print job, another velocity will be selected. Examples of dot matrix printers of this type are the IBM Proprinter and the IBM Personal Computer Graphics Printer (IBM is a Registered Trade Mark of International Business Machines Corporation).

The primary problem with the above dot matrix printers which are controlled by application programs is that no velocity variation can take place while running the application program. Generally, a worst case velocity selection is made on a job basis by the programmer during the writing of the application program. With a worst case being selected, there will be many instances, due to the characteristics of the data stream, where the printer is being inefficiently utilised.

US-A-4,469,460 describes a printer of the type having a print head which moves relative to a print medium and a print head control system. The print head control system selects a velocity for the print head which is dependent on the length of each line of characters to be printed. This velocity is not dependent on the density of the characters in the line.

Patent Abstracts of Japan, vol. 10, no 55 (M-458) [2112], 5 March 1986 describes a print head velocity control system for a printer which selects a velocity for the print head which is dependent on the density of the characters actually being printed and on the length of space regions on either side of any low density regions. As the print head moves along the line being printed it passes through regions K where the character density is high and through regions A where the character density is low. The velocity of the print head is relatively low in the regions K of high character density and relatively high in the regions A of low character density, the actual velocity difference depending on the length of space regions on either side of regions A. The velocity of the print head is therefore not constant for the whole of the operation of printing a line of characters.

The object of the present invention is to provide an improved control system for the movement of the print head in a printer.

The present invention relates to a printer system of the type which comprises means for receiving sets of print data each representing a line of characters to be printed on a print medium, a print head for performing print operations in accordance with the sets of print data, means for moving the print head relative to the print medium, and a control system for controlling the velocity of movement of the print head and for controlling the print operations.

According to the invention the printer is characterised in that the control system comprises means for selecting the velocity of movement of the print head for printing each line of characters in accordance with whether the dots making up the set of characters to be printed in that line, meet first criteria as to the dot occupancy in adjacent data bytes in said line and their position relative to the begining of said line.

One advantage of such an arrangement is that the printer throughput can be increased without materially affecting costs while still utilising the same low cost printer.

According to a preferred arrangement available print head movement velocities are incorporated into an application program controlling the control system which causes the program to select a velocity based on characteristics of the set of print data for each line of characters to be printed. As the set for each line to be printed is buffered, this data set is scanned or analysed against the available printer head movement velocities. Based on the analysis, a maximum workable head movement velocity is selected, and the line of characters is printed according to the selected velocity.

In order that the invention may be more readily understood an embodiment will now be described with reference to the accompanying drawings, in which:-
Fig. 1 is a block diagram illustration of a control system for a printer according to the invention;
Fig. 2 is a pictorial representation of a portion of a line of characters which can be printed at a relatively fast print head movement velocity;
Fig. 3 is a pictorial representation of a portion of a line characters which must be printed at a relatively slow print head movement velocity;
Fig. 4 is a pictorial representation of a portion of a line of characters having no two dots in consecutive portions in a row and which can be printed at a relatively fast print head movement velocity;
Fig. 5 is a pictorial representation of a portion of a line of characters having no two dots in consecutive portions in a row and requiring a relatively slow print head movement velocity, and
Fig. 6 is a flow chart illustrating an application program for determination of print head velocity based on criteria which includes the characteristics of the buffered line of print data data.

Dot matrix type printers generally include a print head attached to a carriage. Illustrative of low cost dot matrix type printers are the IBM Proprinter and the IBM Personal Computer Graphics Printer. Included in the printhead is a single column of a plurality print wires. Selected ones of the print wires are activated or fired as the print head traverses a print medium in which characters are to be printed. The firing of each print wire will result in a dot being printed on the print medium. Selective firing of the wires will ultimately result in the construction or printing of text characters and/or a graphics object. For example, the character "A" may be made up of a selection of dots in a matrix 5 columns wide and 8 rows high.

With the above noted IBM printers, there are four printing formats available to an application programmer for three separate densities of printed dots and two separate print head movement velocities. These formats will be described in detail later herein. The criteria for selection of these formats relates to the density of the dots in the text or graphics print data. The density of the dots in the print data directly affects the frequency of firing the print wires. If consecutive dots have sufficient separation, then the print head carriage can move at a faster rate. Also, with less dot density, a reduced amount of print data may be sent to the printer using certain formats.

For any particular job, one of the available print head movement velocities is selected by the user and embedded in the application program. Thereafter, unless the program is modified, no alternative velocities are available to an operator using the application program on a standalone, or host connected, device controlled display computer workstation or system. In many instances, the system will be a keyboard/display computer system, and, as such, the device is a keyboard. Included in the system will be a printer such as a dot matrix printer described above.

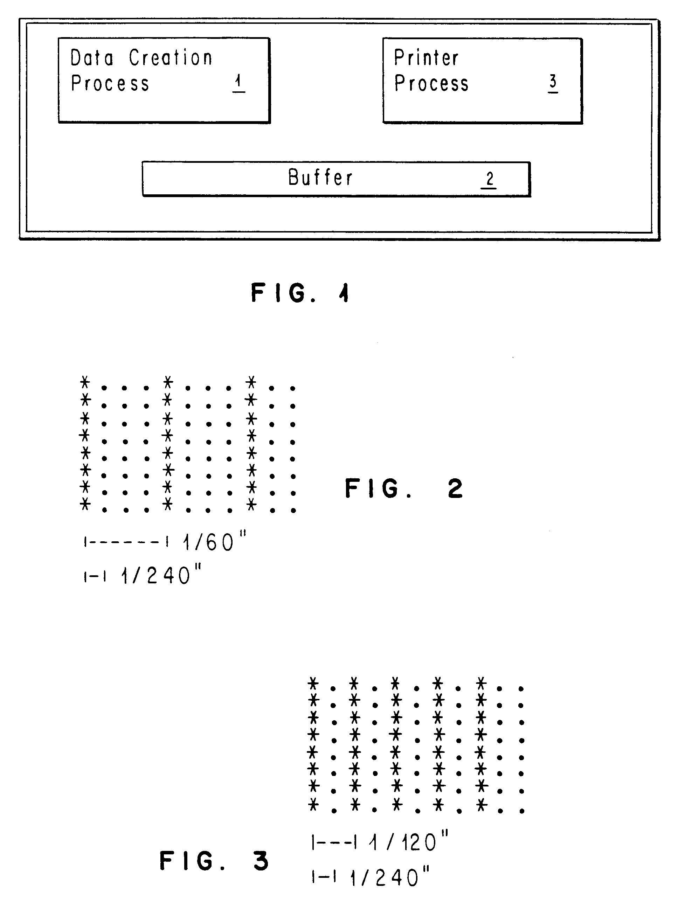

In Fig. 1, an application program that causes printing of print data is illustrated. The application program is made up of a minimum of two processes. A process is defined as a section of program code that performs a particular function. Data creation process 1 determines what print data is to be printed, and places that data in a buffer 2. When the buffer 2 contains all the print data deemed necessary by data creation process 1, printing process 3 takes control and sends the print data in buffer 2 to the printer.

Refer next to Fig. 2. Print data containing instructions for printing dots spaced at 1/60 inch (1 inch ≃ 2.54 cm) apart can be printed in a first printing format requiring 60 data bytes for every inch of printed output. In this instance, a relatively fast print head movement velocity is to be used by the printer. For the above noted printers, the identifier that is sent to the printer to specify this first printing format is an Escape character (Esc) followed by the letter K.

Refer next to Fig. 3. Print data that contains instructions for printing dots spaced at 1/120 inch apart can be printed in a second printing format requiring 120 data bytes for every inch of printed output. In this instance, a relatively slow print head movement velocity is to be used by the printer. For the above noted printers, the identifier that is sent to the printer to specify this second printing format is an Escape character followed by the letter L.

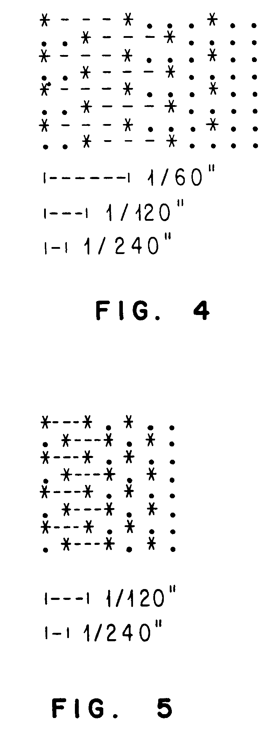

Refer next to Fig. 4. Print data that contains instructions for printing columns of dots spaced at 1/120 inch apart and results in the printing of no two consecutive dots in a row closer than 1/60 inch apart can be printed using a third printing format requiring 120 data bytes for every inch of printed output. However, in this case, since no consecutive dots are to be printed closer than 1/60 inch, a relatively fast print head movement velocity can be used by the printer. For the above noted printers, the identifier that is sent to the printer to specify this third printing format is an Escape character followed by the letter Y.

Refer next to Fig. 5. Print data that contains instructions for printing columns of dots spaced at 1/240 inch apart must use a fourth printing format requiring 240 data bytes for every inch of printed output. In this printing format, a requirement exists that no two consecutive dots in a row be closer than 1/120 inch apart. The printer will use a relatively slow print head movement velocity. If consecutive dots are to be printed closer than 1/120 inch apart, then some dots will not be printed. For the above noted printers, the identifier that is sent to the printer to specify this fourth format is an Escape character followed by the letter Z.

In accordance with the present invention, a program such as that illustrated in Fig 1 is provided. Added to the printer process 3 is program code for analysing the characteristics of the set of print data for each line of characters to be printed. Included in the program code are line buffering capabilities, and all available formats for printing characters. Following a determination of the characteristics of each set of print data in buffer 2, the printer process 3 selects the optimum format from the available formats for printing the data, and then the set of print data is issued to the printer with the selected format for printing at the selected print head velocity.

All print or graphics data will be placed in buffer 2 by the data creation process 1 in the format for printing the character portion illustrated in Fig. 5. This is a default format which is equivalent to a worst case selection by a user. All other formats are derivatives of this format. Upon analysing a set of print data, it may well be that a different format can be selected for printing the set of data at a higher printhead velocity. The printer process 3 analyses the set of data in the buffer 2 and selects an optimum format for printing out the set of data using the criteria set out in the following print mode determination table.

| Criteria | Format | Send |
|---|---|---|
| All bytes = 0 except 0,4,8,12,etc | Esc K | Bytes 0,4,8,12,etc |
| 1) All odd bytes = 0 | Esc Y | Even bytes |
| 2) No dots side-by-side in consecutive even bytes | | |
| All odd bytes = 0 | Esc L | Even bytes |
| Odd bytes not = 0 | Esc Z | All bytes |

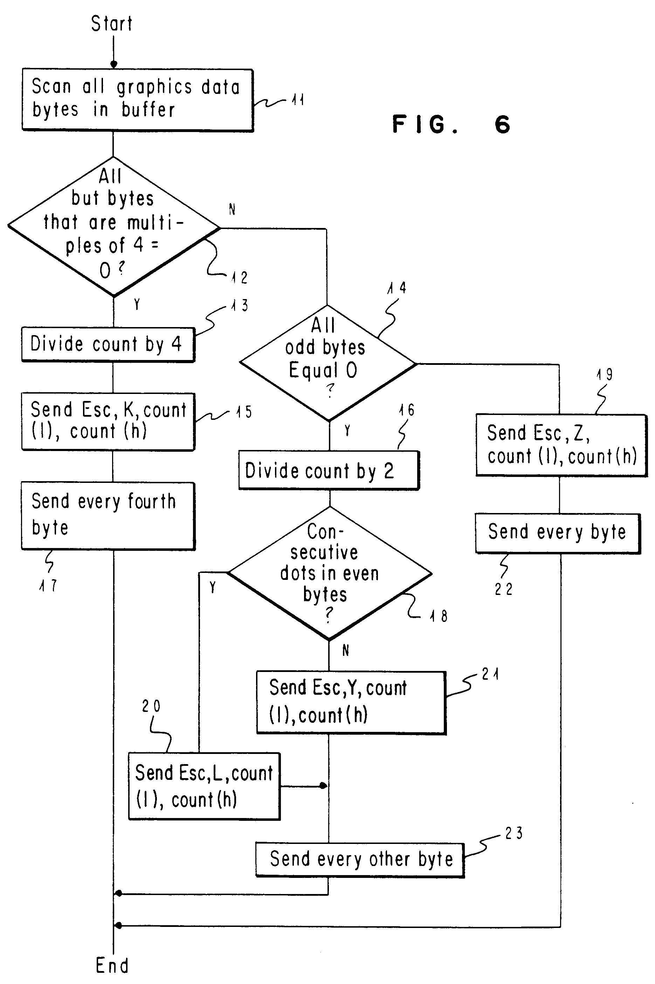

Set out below is an illustration of a routine to be included in printer process 3. This routine is in programming design language from which both source code and machine code are derivable. 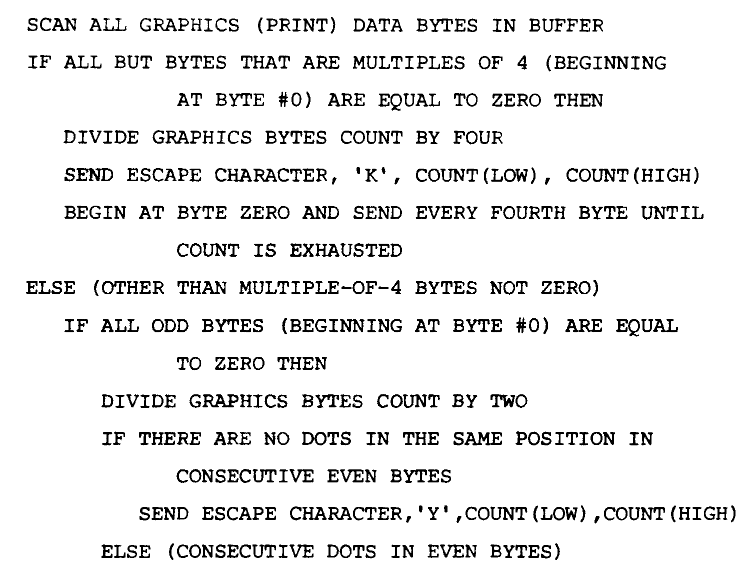 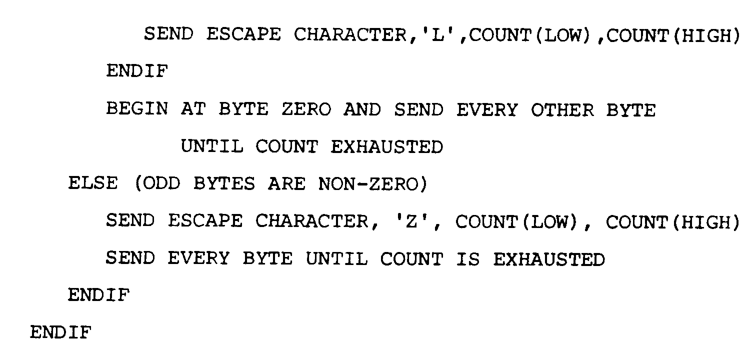
Refer next to Fig. 6 in conjunction with the above programming design language routine. The routine defines the operations performed by the printer process 3 in determining an optimum printing format and causing subsequent printing to occur according to the format.

All print data (graphics data) in buffer 2 must be scanned before the results can be analyzed. This is illustrated in block 11.

The format that causes printing at the highest print head velocity and has the fewest number of bytes to send to the printer is Esc K (Fig. 2). If buffer 2 contains one byte every 1/240 inch, since the Esc K format requires that dot density be not less than 1/60 inch, all the data bytes with the exception of every fourth byte must be zero or contain no graphics data dots. This is illustrated in block 12. If bytes that are not multiples of four are all zero, then the graphics data count is divided by 4 as shown in block 13. This is since only every fourth byte will be sent. Next, the 4-byte graphics Escape K sequence header is sent to the printer as indicated by block 15. The header is followed by every fourth byte from the graphics buffer beginning at byte 0 until the count is exhausted as shown in block 17.

If the data in the buffer 2 does not qualify for the Esc K format, then the next best format is the Esc Y format (Fig. 3). The print head will move at the same velocity as with the Esc K format. However, twice as many data bytes must be sent. In order to qualify for Esc Y, all the odd-numbered bytes must be zero as determined by block 14. If zero, the columns of dots will have a minimum separation of 1/120 inch. Once this criteria has been met, the graphics data count is divided by 2 as indicated by block 16, and a determination is made as to whether a second criteria is met. Moving at the relatively fast print head velocity, the printer is only able to print every other dot position. Consecutive dots must have a minimum separation of 1/60 inch when the relatively fast print head velocity is to be used. Therefore, if the print buffer contains no data representing dots in the same positions in consecutive even bytes as determined by block 18, then the Esc Y format will be selected. The 4-byte graphics Escape Y sequence header is sent to the printer as illustrated in block 21. The header is followed by all the even-numbered bytes from the graphics buffer 2 beginning at byte 0 until the count is exhausted as indicated by block 23.

If all the odd-numbered bytes in the buffer are zero, and there is data representing dots in the same positions in consecutive even bytes as indicated by block 18, then the third format (Esc L) may be used (Fig. 4). The 4-byte graphics Escape L sequence header is sent to the printer as indicated by block 20, followed by all the even-numbered bytes from the graphics buffer beginning at byte 0 until the count is exhausted as in block 23.

Finally, if none of above criteria are met, the buffer must be sent using the Esc Z format (Fig. 5). Here, the graphics data count as was passed to the print process 2 by the data creation process 1 is used. The 4-byte graphics Escape Z sequence header is sent to the printer as indicated by block 19. The header is followed by all the bytes in the buffer as indicated by block 22.

In summary, a unique method of optimising printer throughput is provided by incorporating all available print head movement velocities into an application program and causing the program to select a velocity based on data stream characteristics for a line of data to be printed. When the set of data for a line has been buffered, the set of data is analysed against the available print head movement velocities. Based on the analysis, a maximum workable print head movement velocity is selected, and the set of data is printed according to the selected velocity.

## Claims

1. A printer system comprising
means (2) for receiving sets of print data each representing a line of characters to be printed on a print medium;
a print head for performing print operations in accordance with said sets of print data;
means for moving said print head relative to said print medium; and
a control system (3) for controlling the velocity of movement of said print head and for controlling said print operations;
characterised in that
said control system comprises
means for selecting the velocity of movement of said print head for printing each line of characters in accordance with whether the dots making up the set of characters to be printed in that line meet first criteria as to the dot occupancy in adjacent data bytes in said line and their position relative to the beginning of said line.

2. A printer system as claimed in claim 1 further characterised in that said first criteria for selecting the print head velocity include whether said dots
appear (12) only in bytes whose position relative to the beginning of said line is a multiple of 4; or
appear (14) only in bytes whose position relative to the beginning of said line is a multiple of 2.

3. A printer system as claimed in claim 1 or claim 2 further characterised in that said first criteria for selecting the print head velocity include whether said dots appear in consecutive even bytes (18).

4. A printer system as claimed in any preceding claim wherein said control system further comprises
means for sending sequence headers and data comprising either all or part of a set of print data in said receiving means from said receiving means to said print head in accordance with whether the dots making up the set of characters to be printed in that line meet second criteria as to their position relative to the beginning of said line.

5. A printer system as claimed in claim 4 further characterised in that said second criteria for selecting whether all or part of the data is sent include whether said dots
appear (12) only in bytes whose position relative to the beginning of said line is a multiple of 4; or
appear (14) only in bytes whose position relative to the beginning of said line is a multiple of 2.

6. A printer system as claimed in any one of the preceding claims characterised in that said control system selects the highest suitable one of a predetermined number of different velocities of movement of said print head.

## Patentansprüche

1. Ein Druckersystem enthält
Mittel (2) zum Empfang von Druckdatensätzen, wobei jeder Satz eine auf einem Druckmedium zu druckende Zeichenzeile repräsentiert;
Einen Druckkopf zur Durchführung von Druckvorgängen gemäß der Druckdatensätze;
Mittel zum Bewegen des Druckkopfes bezogen auf das Druckmedium; und
ein System (3) zur Steuerung der Bewegungsgeschwindigkeit des Druckkopfes und zur Steuerung von Druckvorgängen;
beschrieben in dem
Steuersystem, das
Mittel zur Auswahl der Bewegungsgeschwindigkeit des Druckkopfes zum Drucken jeder Zeichenzeile enthält, und zwar in Übereinstimmung damit, ob die Punkte, die den in der Zeile zu druckenden Zeichensatz bilden, das erste Kriterium bezüglich der Punktbelegung in den dieser Zeile benachbarten Datenbytes und ihre Position bezogen auf den Anfang der Zeile erfüllen.

2. Ein Druckersystem wie in Anspruch 1 angemeldet, weiter beschrieben, in dem das erste Kriterium zur Auswahl der Geschwindigkeit des Druckkopfes einschließt, ob die Punkte
nur in Bytes erscheinen (12), deren Position bezogen auf den Zeilenanfang um jeweils vier erhöht wird; oder
nur in Bytes erscheinen (14), deren Position bezogen auf den Zeilenanfang um jeweils zwei erhöht wird.

3. Ein Druckersystem wie in Anspruch 1 oder Anspruch 2 angemeldet, weiter beschrieben, in dem das erste Kriterium zur Auswahl der Geschwindigkeit des Druckkopfes enthält, ob Punkte in aufeinanderfolgenden, geraden Bytes (18) erscheinen.

4. Ein Druckersystem wie in irgendeinem vorhergehenden Anspruch angemeldet, wobei das Steuerungssystem außerdem enthält
Mittel zum Senden von Sequenzanfängen und Daten, wobei jedes alle oder Teile eines Druckdatensatzes enthält, in dem Mittel enthalten sind, die von dem Druckkopf empfangen wurden, und zwar in Übereinstimmung damit, ob die Punkte, die den in der Zeile zu druckenden Zeichensatz bilden, das zweite Kriterium bezüglich der Punktbelegung in den dieser Zeile benachbarten Datenbytes und ihre Position bezogen auf den Anfang der Zeile erfüllen.

5. Ein Druckersystem wie in Anspruch 4 angemeldet, weiter beschrieben, in dem das zweite Kriterium zur Auswahl, ob alle oder Teile der Daten gesendet werden, einschließt, ob die Punkte
nur in Bytes erscheinen (12), deren Position bezogen auf den Zeilenanfang um jeweils vier erhöht wird; oder
nur in Bytes erscheinen (14), deren Position bezogen auf den Zeilenanfang um jeweils zwei erhöht wird.

6. Ein Druckersystem wie in irgendeinem der vorhergehenden Ansprüche beschrieben, in dem das Steuerungssystem die größtmögliche Bewegungsgeschwindigkeit des Druckkopfes aus einer vorbestimmten Anzahl von verschiedenen Geschwindigkeiten auswählt.

## Revendications

1. Système d'imprimante comprenant
un moyen (2) pour recevoir des ensembles de données d'impression représentant chacun une ligne de caractères à imprimer sur un support d'impression;
une tête d'impression pour effectuer des opérations d'impression en fonction desdits ensembles de données d'impression;
un moyen pour déplacer ladite tête d'impression par rapport audit support d'impression; et
un système de commande (3) pour commander la vitesse de déplacement de ladite tête d'impression et pour commander lesdites opérations d'impression;
caractérisé en ce que
ledit système de commande comprend
des moyens pour sélectionner la vitesse de déplacement de ladite tête d'impression pour imprimer chaque ligne de caractères selon que les points constituant la série de caractères à imprimer dans cette ligne satisfont à des premiers critères sur l'encombrement des points dans des octets de données adjacents dans ladite ligne et leur position par rapport au début de ladite ligne.

2. Système d'imprimante selon la revendication 1 caractérisé en outre en ce que lesdits premiers critères pour sélectionner la vitesse de la tête d'impression incluent si lesdits points
apparaissent (12) uniquement dans des octets dont la position par rapport au début de ladite ligne est un multiple de 4; ou
apparaissent (14) uniquement dans des octets dont la position par rapport au début de ladite ligne est un multiple de 2.

3. Système d'imprimante selon la revendication 1 ou la revendication 2 caractérisé en outre en ce que lesdits premiers critères pour sélectionner la vitesse de la tête d'impression incluent si lesdits points apparaissent dans des octets pairs consécutifs (18).

4. Système d'imprimante selon l'une quelconque des revendications précédentes dans lequel ledit système de commande comporte
un moyen pour envoyer des en-têtes de séquence et des données comprenant tout ou partie d'un ensemble de données d'impression dans ledit moyen de réception, du moyen de réception vers ladite tête d'impression selon que les points constituant la série de caractères à imprimer dans cette ligne satisfont à des seconds critères tels que leur position par rapport au début de ladite ligne.

5. Système d'imprimante selon la revendication 4 caractérisé en outre en ce que les seconds critères pour sélectionner si tout ou partie des données est envoyé incluent si lesdits points
apparaissent (12) uniquement dans les octets dont la position par rapport au début de ladite ligne est un multiple de 4; ou
apparaissent (14) uniquement dans des octets dont la position par rapport au début de ladite ligne est un multiple de 2.

6. Système d'imprimante selon l'une quelconque des revendications prédédentes caractérisé en ce que ledit système de commande sélectionne la vitesse convenable la plus élevée parmi un nombre prédéterminé de vitesses différentes de déplacement de ladite tête d'impression.
